# EUROPEAN PATENT SPECIFICATION

(11) **EP 1 755 429 B1**
(45) Date of publication and mention of the grant of the patent: **10.09.2008**
(21) Application number: 05747351.4
(22) Date of filing: 03.06.2005
(51) Int. Cl.: A47J 43/04, A21C 11/20

(54) **CUTTING DEVICE FOR PASTA MAKING ATTACHMENT TO A MULTI-PURPOSE KITCHEN MACHINE**
SCHNEIDVORRICHTUNG FÜR NUDELHERSTELLAUFSATZ EINER VIELZWECKKÜCHENMASCHINE
DISPOSITIF DE COUPE POUR ACCESSOIRE POUR PATES DE ROBOT DE CUISINE MULTIFONCTION

(30) Priority: 18.06.2004 GB 0413639
(43) Date of publication of application: 28.02.2007
(73) Proprietor: Kenwood Limited, Havant, Hampshire PO9 2NH (GB)
(72) Inventor: EDEN, Roland, c/o Kenwood Marks Limited, Havant, 2 Hampshire PO9 2NH (GB)
(74) Representative: Marsh, Robin Geoffrey
(86) International application number: PCT/GB2005/002192
(87) International publication number: WO 2005/122855

(56) References cited:
- US-A- 4 332 539

## Description

This invention relates to a cutting device intended for use with a pasta-making attachment for a multi-purpose kitchen machine, such as a food mixer or a food processor, and it relates also to a pasta-making attachment provided with such a cutting device. Document US 4332539 A describes background art which is regarded as useful to understand the invention.

Multi-purpose kitchen machines, such as those mentioned above, are typically provided with a number of drive outlets; the various outlets presenting drive connections designed to accommodate attachments designed to perform various tasks; the drives provided at the various outlets operating at driving speeds and torques appropriate to the attachments they are intended to accommodate, thereby to enable the machine and its attachments to be used for a variety of purposes in the kitchen.

One such attachment which is known for use with multi-purpose kitchen machines comprises a pasta-making attachment which includes a housing containing an extruder, intended to be driven by a predetermined drive outlet of a multi-purpose kitchen machine, and a pasta die, formed with one or more apertures intended to impart a predetermined shape to pasta material extruded therethrough. The die is replaceable, and a range of dies may be provided to produce differently shaped pastas.

The housing, which is configured for connection to a drive outlet capable of driving the extruder at an appropriate speed and with the necessary torque, includes or is coupled to a hopper device through which the pasta ingredients can be fed to the extruder, which is driven in rotation by the chosen drive outlet of the multi-purpose kitchen machine to force the pasta ingredients through the apertures in the pasta die. By this means, the pasta is extruded from the attachment in strands of a desired shape, determined by the die configuration.

The pasta strands typically can become quite long and it is desirable to provide a means whereby they can be cut by a user to a chosen length to produce so-called short pasta and, indeed, some pasta-making attachments are provided with cutting devices intended for that purpose. Difficulties arise, however, in a number of respects related to the provision of such cutting devices.

In particular, pasta can be extruded in various shapes and sizes, depending upon factors such as the nature and/or consistency of the ingredients and the shaping of the dies through which the ingredients are extruded. It is thus important that the pasta-making attachment can be flexibly configured so as to be capable of operating with or without the cutting device in place, partly because it will not always be needed, and partly because the arrangement as a whole needs to permit ready replacement of the dies. Moreover, the cutting device may present a safety hazard to children, for example, if left in place on the pasta-making attachment whilst the kitchen machine is unattended. The cutting device therefore needs to be readily removable and securable from and to the remaining components of the pasta-making attachment.

However; further difficulties arise in ensuring that the cutting device may be firmly secured to the pasta-making attachment for use, yet readily and conveniently removable therefrom by means which are simple to operate without using significant force, and/or without adversely affecting the attachment of existing components to the extent that such components may be loosened and/or rendered difficult to remove.

The invention aims to reduce at least one of the aforementioned difficulties and according to the invention from one aspect there is provided a cutting device for a pasta-making attachment to a multi-purpose kitchen machine; the attachment comprising a housing, attachable to a predetermined drive outlet of the machine and having an opening facing outwardly from the machine through which formed pasta can emerge, wherein the cutting device includes a hollow, tapered shell member of frusto-conical form with its smaller end dimensioned to partially overlie said housing and its larger end formed with an internal screw thread, and a hollow, substantially tubular securing member formed with an external screw thread configured to engage with said internal screw thread whereby the securing member can be screwed together with said shell member; said securing member bearing a plurality of flexible fingers extending inwardly of the shell member to partially overlie said housing; said fingers being urged into engagement with said housing when the securing member and the shell member are screwed together; the securing member supporting a plate formed with an aperture adapted to align with the opening in said housing and the plate bearing a cutter blade movable relative thereto for cutting pasta emergent from said opening.

Preferably the screw threads carried by the shell member and the securing member are configured as conventional right-handed threads, such that clockwise rotation of the shell member relative to the securing member is effective to tighten the fixing therebetween.

It is further preferred that the cutter blade is mounted for pivotal movement on said plate so that the blade can be swept from side to side across the aperture in the plate. Such motion provides an efficient cutting action; moreover the pivotal mounting is easy to fabricate.

In one preferred embodiment, the blade presents two sharpened edges so that it can cut efficiently when swept in either direction across the aperture in said plate.

The plate may, if desired, carry one or more cleaning and/or sharpening stations for the blade.

In another preferred embodiment, the plate is affixed to the securing member by means of a plurality of screws passing through holes formed in a collar of said securing member and engaging in pillars extending outwardly from that surface of said plate not swept by the cutter blade.

It is further preferred in the last recited embodiment that groove members are associated with the holes in said collar, and the pillars are disposed so as to enter respective grooves to permit the plate and the securing means to be securely fastened together against relative rotation.

In accordance with another aspect of the invention, there is provided, in combination, a pasta-making attachment to a multi-purpose kitchen machine and a cutting device therefor; the attachment comprising:
a housing, having a first end attachable to a predetermined drive outlet of the machine, and having a second end formed with an opening, facing outwardly from the machine, through which formed pasta can emerge;
a hopper feed through which pasta-making ingredients can be introduced into the interior of said housing;
an extruder device disposed within said housing and adapted to be driven in rotation from said outlet; and
a die disposed in or adjacent said second end of the housing and formed with one or more apertures through which pasta can be forced by said extruder device in order to impart a predetermined shaping to the pasta,
wherein the cutting device includes:
a hollow, tapered shell member of frusto-conical form with its smaller end dimensioned to overlie at least said second end of said housing and its larger end formed with an internal screw thread; and
a hollow, substantially tubular securing member formed with an external screw thread configured to engage with said internal screw thread whereby the securing member can be screwed together with said shell member; said securing member bearing a plurality of flexible fingers extending inwardly of the shell member to partially overlie said housing; said fingers being urged into engagement with said housing when the securing member and the shell member are screwed together;
the securing member supporting a plate formed with an aperture adapted to align with the opening in said housing, and the plate bearing a cutter blade movable relative thereto for cutting pasta emergent from said opening.

In order that the invention may be clearly understood and readily carried into effect, one embodiment thereof will now be described, by way of example only, with reference to the accompanying drawings, of which:
Figure 1 shows, in exploded and perspective view, a cutting device and an attachment, respectively in accordance with specific examples of the first and second aspects of the invention; and
Figure 2 shows, in similar view to Figure 1, the components of the cutting device in greater detail.

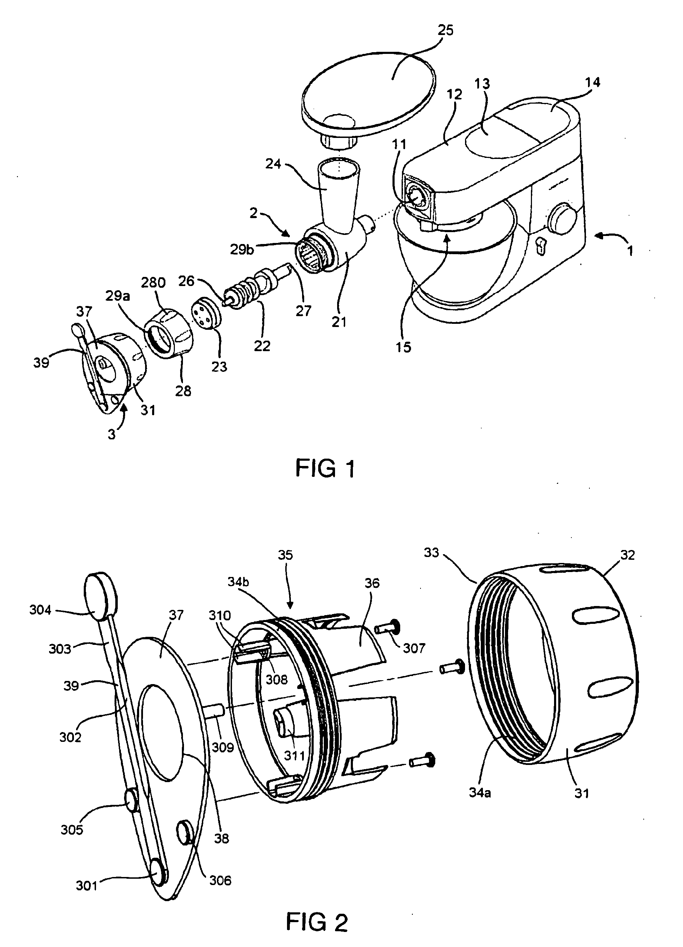

Referring now to Figure 1, a multi-purpose kitchen machine comprising a food mixer of the kind sold by associates of the present applicants under the designation "Kenwood Chef Sovereign" is shown at 1. The invention, of course, can be used with many different kinds of multi-purpose kitchen machine and the above-specified product is mentioned by way of example only.

The machine 1 presents a relatively low-speed, high torque rotary drive outlet 11 at the front of a head portion 12 thereof; the drive outlet 11 being normally concealed, when not in use, behind a removable trim panel (not shown). Other drive outlets having different characteristics (e.g. speed, torque and/or fixture configuration) are provided, in this example, behind trim panels 13 and 14 on the upper surface of the head 12, and on the underside of the head 12, as indicated by the arrow 15. Other outlets may be provided instead of, or in addition to, those just described.

It will be appreciated that the drive outlet 11 presents a rotary drive executed about a horizontal drive axis, and this is convenient for use with attachments such as pasta makers in which, as will be described, pasta is extruded to emerge forwardly from an attachment 2 to the machine in a generally horizontal direction.

The attachment 2 is a dedicated pasta-making attachment and comprises a generally tubular, hollow housing 21 provided at one end thereof with a fixture complementary to that presented by the outlet 11 enabling the housing 21 of the attachment 2 to be releasably secured to the machine 1 to take advantage of the rotary drive provided at the outlet 11. Mounted within the housing 21 is an extruder device 22 adapted to be rotated by the drive provided at outlet 11 and to extrude forwardly, and through a die 23, pasta-making ingredients introduced into the interior of the housing 21 by way of a feed-tube 24 into which a funnel 25 may be inserted if desired.

The die 23 comprises one or more apertures, usually associated with central cores, configured to impose, upon pasta extruded therethrough, a predetermined shaping. There being a number of classically accepted shapes for pasta, it will be appreciated that a plurality of dies may be supplied, each to define a respective shape for the pasta. The construction and design of pasta dies such as 23 and extruder devices such as 22 are well established and do not form part of this invention. They are thus not described further herein, save to mention that a user selects a die appropriate to the type of pasta being prepared and inserts it into the housing 21 before commencing a pasta-making operation, and that the central region of the inwardly-facing surface of the die 23 is typically indented to provide a location and/or bearing for the forward end 26 of the extruder device 22; the rearward end 27 of the extruder being configured to accept the rotary drive presented at outlet 11.

The extruder device 22 and the die 23 are retained within the housing 21 by means of a nut 28 which is internally threaded as at 29a to screw onto an external threading 29b formed on the forwardly-facing end of the housing 21. Nut 28 may be knurled or otherwise treated to facilitate its turning to fasten the aforementioned components properly in place within the housing 21. Bearing in mind the stresses and strains that can be imparted to various components during extrusion of relatively viscous materials and the heat that can be developed thereby, however, it is often preferred to form the nut 28 with external driving indentations or protrusions designed to be engaged either by a dedicated spanner or by a general purpose spanner (neither shown), to facilitate loosening of the nut 28 from the housing 21.

If desired, a pusher device (not shown) of any convenient design may be provided to enable a user to push pasta-making ingredients through the feed tube 24, to encourage their engagement with the extruder device 22.

Figure 1 shows, at 3, a cutting device in accordance with one example of the first aspect of the invention. Some components of the cutting device 3 are, however, best seen in Figure 2 wherein the cutting device can be seen to include a hollow, tapered shell member 31 of frusto-conical form with its smaller end 32 dimensioned to partially overlie the attachment housing 21 (and also the nut 28); the intention being, in this example, for the smaller end 32 of the shell member 31 to engage with, or closely approximate the position of, the feed tube 24 of the attachment housing 21. The larger end 33 of the shell member 31 is formed with an internal screw thread 34a.

A hollow, substantially tubular securing member 35 is formed with an external screw thread 34b configured to engage with said internal screw thread 34a presented by the shell member 31 whereby the securing member 35 can be screwed together with said shell member 31. The securing member 35 bears a plurality of flexible fingers, such as 36 extending inwardly of the shell member 31, when the two components are fitted together, thereby to partially overlie the housing 21 of the attachment 2 when the cutting device 3 is to be secured to the attachment 2 as aforesaid. The fingers 36 are urged into engagement with the housing 21 when the securing member 35 and the shell member 31 are screwed together.

Prior to the attachment of the securing member 35 to the shell member 31, the securing member 35 is fixed to a plate 37 which is formed with an aperture 38 adapted to align with the opening in the housing 21 through which the pasta is intended to emerge. The plate 37 bearing a cutter blade 39 which is movable relative thereto for cutting pasta emergent from the housing 21 and though the aperture 38.

In this example, the blade 39 is pivotally mounted to the plate at 301 by any suitable means such as a rivet, and is sharpened upon both of its edges, as at 302 for effective cutting of the pasta when the blade 39 is moved manually across the aperture 38 in either direction. The blade is extended beyond the plate 37 as shown at 303 and provided with a grip or handle 304 to facilitate manual grasping and movement of the blade 39. Stops 305 and 306 are provided on the plate 37, symmetrically disposed to either side of the aperture 38, to limit the travel of the blade 39 and thereby constrain the blade 39 to a limited, to-and-fro, pivotal sweeping action across the aperture 38; the stops 305 and 306 being positioned to allow the blade 39 to just clear the aperture 38 to either side thereof.

In this example, the fixing of the plate 37 to the securing member 35 is achieved by means of three screws such as 307 secured through respective apertures in collars such as 308 into respective pillars such as 309 carried by the plate 37 and extending rearwardly therefrom, i.e. towards the securing member 35. In this example, each collar such as 308 is associated with a respective groove, formed between a pair of flanges such as 310, into which the respective pillar 309 is received when the components 35 and 37 are secured together by means of the screws 307. The flanges are integrally formed with the collars and/or the interior surface of the securing member 35 and thus help to prevent relative rotation between the components 35 and 37.

In operation, the attachment 2 is secured to the machine 1 in known manner when it is desired to make pasta; the appropriate die 23 having been inserted into the housing 21 of the attachment, and secured therein by tightening of the nut 28, as described above.

When it is desired to utilise the cutting device 3, the shell member 31 is held in place with its smaller end 32 over the housing 21 of the attachment 2 and contacting, or nearly contacting, the feed tube 24 thereof. Components 35 and 37, which are semi-permanently secured together as described above by means including the screws 307, are then addressed to the shell member 31 and the screw threads 34a and 34b engaged. Components 35 and 37 are held stationary whilst the shell member 31 is then rotated clockwise, relative to the components 35 and 37, to tighten the screw connection made by the threads 34a and 34b; an action which causes the flexible fingers 36 to move axially within the shell member 31. Due to the frusto-conical configuration of the inner surface of the shell member 31, this axial movement forces the flexible fingers 36 into firm engagement with the outer surface of the housing 21 of the attachment 2, thereby securely coupling the cutting device 3 to the attachment 2.

In this embodiment of the invention, the screw threads 34a and 34b are configured to provide a right-handed screw connection, whereby engagement between the parts 35/37 and 31 is tightened by clockwise screwing action and loosened by counter-clockwise screwing action.

It will be appreciated that, if desired, the external surface of the housing 21 may be roughened or otherwise treated where it is intended to be gripped by the fingers 36, and/or the contacting surfaces of the fingers 36 may be configured and/or treated to enhance gripping contact between the fingers 36 and the housing 21.

In this example, it is arranged that the flanges 310, which are arranged in pairs, equi-angularly distributed around the inner circumference of the securing member 35, and three further protrusions such as 311 interleaved in angle with the pairs of flanges 310, are intended to locate into respective flutes such as 280 (see Figure 1) formed in the outer surface of the nut 28 when the cutting device is assembled to the attachment, to assist in stabilising the cutting device against unwanted rotation relative to the attachment.

It will also be appreciated that, if desired, the plate 37 may carry sharpening and/or cleaning devices for the blade 39 to either or both sides of the aperture 38 and that, in general, alternative fixing procedures to those described herein may be employed, particularly with regard to the means of securing the components 35 and 37 together.

## Claims

1. A cutting device (3) for a pasta-making attachment (2) to a multi-purpose kitchen machine (1); the attachment comprising a housing (21), attachable to a predetermined drive outlet (11) of the machine and having an opening facing outwardly from the machine through which formed pasta can emerge,
wherein the cutting device (3) includes a hollow, tapered shell member (31) of frusto-conical form with its smaller end (32) dimensioned to partially overlie said housing (21) and its larger end (33) formed with an internal screw thread (34a), and a hollow, substantially tubular securing member (35) formed with an external screw thread (34b) configured to engage with said internal screw thread (34a) whereby the securing member (35) can be screwed together with said shell member (31); said securing member (35) bearing a plurality of flexible fingers (36) extending inwardly of the shell member to partially overlie said housing; said fingers being urged into engagement with said housing when the securing member (35) and the shell member are screwed together; the securing member (35) supporting a plate (37) formed with an aperture (38) adapted to align with the opening in said housing and the plate bearing a cutter blade (39) movable relative thereto for cutting pasta emergent from said opening.

2. A device according to claim 1 wherein the cutter blade (39) is mounted for pivotal movement on said plate (37) so that the blade can be swept from side to side across the aperture (38) in the plate.

3. A device according to claim 2 wherein said cutter blade (39) is mounted for pivotal movement on said plate (37) by means of a riveted fixing.

4. A device according to claim 2 or claim 3 wherein the blade (39) presents two sharpened edges (302) so that it can cut efficiently when swept in either direction across the aperture (38) in said plate.

5. A device according to any preceding claim wherein the plate (37) carries one or more cleaning and/or sharpening stations for the blade (39).

6. A device according to any preceding claim wherein the plate (37) is affixed to the securing member (35) by means of a plurality of screws (307) passing through holes formed in a collar of (308) said securing member and engaging in pillars (309) extending outwardly from that surface of said plate (37) not swept by the cutter blade (39).

7. A device according to claim 6 wherein groove members (310) are associated with the holes in said collar, and the pillars (309) are disposed so as to enter respective grooves to permit the plate (37) and the securing means (35) to be securely fastened together against relative rotation.

8. The combination of a pasta-making attachment (2) to a multi-purpose kitchen machine (1) and a cutting device (3) therefor; the attachment (2) comprising:
a housing (21), having a first end attachable to a predetermined drive outlet (11) of the machine, and having a second end formed with an opening, facing outwardly from the machine, through which formed pasta can emerge;
a hopper feed (24) through which pasta-making ingredients can be introduced into the interior of said housing (21);
an extruder device (22) disposed within said housing (21) and adapted to be driven in rotation from said outlet; and
a die (23) disposed in or adjacent said second end of the housing and formed with one or more apertures through which pasta can be forced by said extruder device (22) in order to impart a predetermined shaping to the pasta,
wherein the cutting device (3) includes:
a hollow, tapered shell member (31) offrusto-conical form with its smaller end (32) dimensioned to overlie at least said second end of said housing (21) and its larger end (33) formed with an internal screw thread (34a); and
a hollow, substantially tubular securing member (35) formed with an external screw thread (34b) configured to engage with said internal screw thread (34a) whereby the securing member (35) can be screwed together with said shell member (31); said securing member (35) bearing a plurality of flexible fingers (36) extending inwardly of the shell member to partially overlie said housing; said fingers being urged into engagement with said housing when the securing member (35) and the shell member (31) are screwed together;
the securing member (35) supporting a plate (37) formed with an aperture (38) adapted to align with the opening in said housing, and the plate bearing a cutter blade (39) movable relative thereto for cutting pasta emergent from said opening.

## Patentansprüche

1. Schneidvorrichtung (3) für ein Pastateigwerkzeug (2) für eine Küchenmaschine (1); das Werkzeug besteht dabei aus einem Gehäuse (21), das an einem bestimmten Antrieb (11) der Maschine angebracht werden kann und weist eine von der Maschine nach außen weisenden Öffnung auf, durch die geformter Pastateig austreten kann, wobei die Schneidvorrichtung (3) eine hohle, konische Schale (31) in Stumpfkegelform aufweist, deren kleineres Ende (32) so dimensioniert ist, dass es das besagte Gehäuse (21) teilweise überlagert, und deren größeres Ende (33) ein Innengewinde (34a) sowie ein hohles, im Wesentlichen rohrförmiges Befestigungsglied (35) mit einem Außengewinde (34b) aufweist, das so konfiguriert ist, dass es in das besagte Innengewinde (34a) eingreift, so dass das Befestigungsglied (35) mit der besagten Schale (31) verschraubt werden kann, und wo das besagte Befestigungsglied (35) eine Vielzahl von flexiblen Fingern (36) aufweist, die sich in das Innere der Schale (31) erstrecken, so dass sie teilweise über dem besagten Gehäuse liegen; die besagten Finger werden zum Eingriff in das besagte Gehäuse gezwungen, wenn das Befestigungsglied (35) und die Schale miteinander verschraubt werden; das Befestigungsglied (35) stützt eine Platte (37) ab, in der eine Öffnung (38) angebracht ist, die mit der Öffnung in dem besagten Gehäuse fluchtet, und woi die Platte eine Schneidklinge (39) aufweist, die ihr gegenüber eine relative Bewegung zum Abschneiden von aus der besagten Öffnung austretendem Pastateig ausführen kann.

2. Vorrichtung gemäß Anspruch 1, bei der die Schneidklinge (39) zum Schwenken über der besagten Platte (37) drehbar so gelagert ist, dass die Schneidklinge seitlich über der Öffnung (38) in der Platte hin- und herbewegt werden kann.

3. Vorrichtung gemäß Anspruch 2, bei der die besagte Schneidklinge (39) zum Verschwenken über der besagten Platte (37) mittels einer vernieteten Befestigungsvorrichtung drehbar gelagert ist.

4. Vorrichtung gemäß Anspruch 2 oder Anspruch 3, bei der die Schneidklinge (39) zwei geschärfte Schneidkanten (302) aufweist, so dass sie wirksam schneidet, wenn sie in einer der beiden Bewegungsrichtungen über die Öffnung (38) der besagten Platte streicht.

5. Vorrichtung gemäß einem der vorhergehenden Ansprüche, bei der die Platte (37) eine oder mehrere Stationen zum Reinigen und/oder Schärfen der Schneidklinge (39) aufweist.

6. Vorrichtung gemäß einem der vorhergehenden Ansprüche, bei der die Platte (37) mit einer Vielzahl von Schrauben (307) an dem Befestigungsglied (35) angebracht ist, die sich durch in dem Bund (308) des besagten Befestigungsglieds ausgebildete Bohrungen erstrecken und in Tragsäulen (309) eingreifen, die sich ausgehend von der Oberfläche der besagten Platte (37), die nicht von der Schneidklinge (39) bestrichen wird, nach außen erstrecken.

7. Vorrichtung gemäß Anspruch 6, bei der Nutenelemente (310) mit den Bohrungen in besagtem Bund assoziiert sind und die Tragsäulen (309) so angeordnet sind, dass sie in entsprechen Nuten eingreifen, so dass die Platte (37) und das Befestigungsglied (35) zuverlässig drehfest miteinander verbunden sind.

8. Kombination eines Pasta-Schneidwerkzeugs (2) mit einer Küchenmaschine (1) und einer Schneidvorrichtung (3) für diese, wobei das Werkzeug (2) wie folgt aufgebaut ist:
einem Gehäuse (21) mit einem ersten Ende, das an einem bestimmten Antrieb (11) der Maschine angebracht werden kann, und mit einem zweiten, Ende mit einer von der Maschine nach außen weisenden Öffnung, durch die geformter Pastateig austreten kann;
ein Aufgabetrichter (24), durch den die Zutaten für die Pastateig-Herstellung in das Innere des besagten Gehäuses (21) eingeführt werden können;
eine in dem besagten Gehäuse (21) angeordnete Extrudiervorrichtung (22), die so ausgeführt ist, dass sie von dem besagten Antrieb in eine Drehbewegung versetzt werden kann; und
eine in, oder neben dem besagten zweiten Ende des Gehäuses angeordnete und mit einer mehreren Öffnungen ausgeführten Matrize, durch die der Pastateig von der besagten Extrudiervorrichtung (22) verpresst werden kann, so dass der Pastateig eine vorgegebene Form erhält,
wobei die Schneidvorrichtung (3) folgende Teile enthält:
eine hohle, konische Schale (31) in Stumpfkegelform , deren kleineres Ende (32) so dimensioniert ist, dass es wenigstens das besagte zweite Ende des besagte Gehäuses (21) überlagert, und sein größeres Ende (33) ein Innengewinde (34a) aufweist; und
mit einem hohlen, im Wesentlichen rohrförmigen Befestigungsglied (35) mit einem Außengewinde (34b), das so konfiguriert ist, dass es in das besagte Innengewinde (34a) eingreift, wobei das Befestigungsglied (35) mit der besagten Schale (31) verschraubt werden kann, wo das besagte Befestigungsglied (35) eine Vielzahl von flexiblen Fingern (36) aufweist, die sich ausgehend von der Schale in das Innere der Schale erstrecken, so dass sie teilweise über dem besagten Gehäuse liegen; die besagten Finger werden zum Eingriff in das besagte Gehäuse gezwungen, wenn das Befestigungsglied (35) und die Schale (31) miteinander verschraubt werden;
wobei das Befestigungsglied (35) eine Platte (37) abstützt, in der eine Öffnung (38) angebracht ist, die mit der Öffnung in dem besagten Gehäuse fluchtend ausgeführt ist und die Platte eine Schneidklinge (39) aufweist, die ihr gegenüber eine relative Bewegung zum Abschneiden von aus der besagten Öffnung austretendem Pastateig ausführen kann.

## Revendications

1. Dispositif de coupe (3) pour un accessoire pour pâtes alimentaire (2) d'un robot de cuisine multifonction (1) l'accessoire comportant un boîtier (21), pouvant être accouplé à une sortie d'entraînement prédéterminée (11) du robot et ayant une ouverture faisant face vers l'extérieur par rapport au robot au travers de laquelle les pâtes alimentaires façonnées peuvent sortir, dans lequel le dispositif de coupe (3) comprend un organe de type manchon conique creux (31) de forme tronconique dont l'extrémité la plus petite (32) est dimensionnée pour recouvrir partiellement ledit boîtier (21) et dont l'extrémité la plus grande (33) est formée avec un filetage intérieur (34a), et un organe d'assujettissement creux dans une large mesure tubulaire (35) forme avec un filetage extérieur (34b) configuré pour entrer en contact avec ledit filetage intérieur (34a) ce par quoi l'organe d'assujettissement (35) peut être vissé avec ledit organe de type manchon (31); ledit organe d'assujettissement (35) portant une pluralité de doigts flexibles (36) s'étendant vers l'intérieur de l'organe de type manchon pour recouvrir partiellement redit boîtier ; lesdits doigts étant sollicités à des fins de mise en contact avec ledit boîtier quant l'organe d'assujettissement (35) et l'organe de type manchon sont vissés ensemble; l'organe d'assujettissement (35) supportant une plaque (37) formée avec une ouverture (38) adaptée à des fins d'alignement sur l'ouverture dans ledit boîtier et la plaque portant une lame de coupe (39) mobile par rapport à celle-ci pour couper les pâtes alimentaires sortant de ladite ouverture.

2. Dispositif selon la revendication 1, dans lequel la lame de coupe (39) est montée à des fins de pivotement sur ladite plaque (37) de telle manière que la lame peut décrire un mouvement de va-et-vient d'un côte à l'autre en travers de l'ouverture (38) la plaque.

3. Dispositif selon la revendication 2, dans lequel ladite lame de coupe (39) est montée à des fins de pivotement sur ladite plaque (37) par le biais d'une fixation à rivet.

4. Dispositif selon la revendication 2 ou la revendication 3, dans lequel la lame (39) présente deux bords affûtés (302) de telle manière qu'elle peut couper de manière efficace quand elle décrit un mouvement de va-et-vient dans l'une ou l'autre direction en travers de l'ouverture (38) dans ladite plaque.

5. Dispositif selon l'une quelconque des revendications précédentes, dans lequel la plaque (37) porte un ou plusieurs emplacements de nettoyage et/ou d'affûtage pour la lame (39).

6. Dispositif selon l'une quelconque des revendications précédente, dans lequel la plaque (37) est fixée sur l'organe d'assujettissement (35) par le biais d'une pluralité de vis (307) traversant des trous formes dans un collet (308) dudit organe d'assujettissement et entrant en contact dans des montants (309) s'étendant vers l'extérieur en provenance de cette surface de ladite plaque (37) non balayée par la lame de coupe (39).

7. Dispositif selon la revendication 6, dans lequel des organes de type rainure (310) sont associes aux trous dans ledit collet, et les montants (309) sont disposés de manière à entrer dans les rainures respectives pour permettre à la plaque (37) et aux moyens d'assujettissement (35) d'être solidemcnt attachés ensemble contre toute rotation relative,

8. Combinaison d'un accessoire pour pâtes alimentaires (2) de robot de cuisine multifonction (1) et d'un dispositif de coupe (3) pour celui-ci, l'accessoire (2) comportant:
un boîtier (21), ayant une première extrémité pouvant être accouplée a une sortie d'entraînement prédéterminée (11) du robot, et ayant une deuxième extrémité formée avec une ouverture, faisant face vers l'extérieur par rapport au robot au travers de laquelle les pâtes alimentaires façonnées peuvent sortir ;
une bouche d'alimentation (24) au travers de laquelle des ingrédients permettant de réaliser des pâtes alimentaires peuvent être introduits dans l'intérieur dudit boîtier (21) ;
un dispositif d'extrusion (22) disposé à l'intérieur dudit boîtier (21) et adapté pour être entraîné par rotation à partir de ladite sortie; et
une matrice (23) disposée dans ladite deuxième extrémité du boîtier ou adjacente à celle-ci et formée avec une ou plusieurs ouvertures au travers desquelles les pâtes alimentaires peuvent être forcées par ledit dispositif d'extrusion (22) afin de donner une forme prédéterminée aux pâtes alimentaires,
dans lequel le dispositif de coupe (3) comprend :
un organe de type manchon conique creux (31) de forme tronconique dont l'extrémité la plus petite (32) est dimensionnée pour recouvrir au moins ladite deuxième extrémité dudit boîtier (21) et dont l'extrémité la plus grande (33) est formée avec un filetage intérieur (34a) ; et
un organe d'assujettissement creux dans une large mesure tubulaire (35) forme avec un filetage extérieur (34b) configure pour entrer en contact avec ledit filetage intérieur (34a) ce par quoi l'organe d'assujettissement (35) peut être vissé avec ledit organe de type manchon (31); ledit organe d'assujettissement (35) portant une pluralité de doigts flexibles (36) s'étendant vers l'intérieur de l'organe de type manchon pour recouvrir partiellement ledit boîtier ; lesdits doigts étant sollicités à des fins de mise en contact avec ledit boîtier quand l'organe d'assujettissement (35) et l'organe de type manchon (31) sont vissés ensemble ;
l'organe d'assujettissement (35) supportant une plaque (37) formée avec une ouverture (38) adaptée à des fins d'alignement sur l'ouverture dans ledit boîtier, et la plaque portant une lame de coupe (39) mobile par rapport il celle-ci pour couper les pâtes alimentaires sortant de ladite ouverture.
